# EUROPÄISCHE PATENTSCHRIFT

(11) **EP 1 063 459 B1**
(45) Veröffentlichungstag und Bekanntmachung des Hinweises auf die Patenterteilung: **29.10.2003**
(21) Anmeldenummer: 99116266.0
(22) Anmeldetag: 18.08.1999
(51) Int. Cl.: F16L 3/237

(54) **Befestigungsvorrichtung für Rohrleitungen**
Mounting device for pipes
Dispositif de fixation pour tuyaux

(30) Priorität: 25.06.1999 DE 29911104 U
(43) Veröffentlichungstag der Anmeldung: 27.12.2000
(73) Patentinhaber: Witzenmann GmbH, 75175 Pforzheim (DE)
(72) Erfinder: Volz, Rüdiger, 75181 Pforzheim (DE)
(74) Vertreter: Blumenröhr, Dietrich

(56) Entgegenhaltungen:
- DE-A- 3 317 171
- GB-A- 1 336 726
- US-A- 3 434 682
- US-A- 4 401 156

## Beschreibung

Die Erfindung betrifft eine Befestigungsvorrichtung für Heizmittel führende starre oder flexible Rohrleitungen als Begleitheizung eines Produktbehältnisses in Form einer Produktleitung, eines Kessels oder dergleichen enthaltend eine Klemme mit einem am Produktbehältnis wenigstens mittelbar anliegenden Sockel und zwei von diesem ausgehende, ein Maul zur Aufnahme der Rohrleitung bildende Schenkel sowie eine Rohrleitung und Klemme mit dem Produktbehältnis verbindendes, letzteres umfangendes Befestigungsband mit Verschluss, wobei der Sockel der Klemme eine Ausnehmung zur unverlierbaren Aufnahme des Befestigungsbandes aufweist.

Befestigungsvorrichtungen dieser Art dienen zum einen der Festlegung von einer oder mehreren Rohrleitungen am Produktbehältnis, beispielsweise an einer Produktrohrleitung, zum anderen sorgen sie aber auch für eine gewisse Beabstandung zwischen Produktbehältnis und Rohrleitung, um deren Korrosion zu verhindern.

Nachteilig ist bei einer Gruppe bekannter Befestigungsvorrichtungen, dass das Befestigungsband oder sonstige der Befestigung dienende Umschlingungsmittel die Einheit aus Rohrleitung und Klemme auf der dem Produktbehältnis abgewandten Seite umfängt. Dies bedingt, dass zur Montage wenigstens zwei Personen erforderlich sind, nämlich eine Person, die die Rohrleitung mit aufgesetzten Klemmen an Ort und Stelle hält, und eine Person, die dann die Befestigungsbänder anlegt und befestigt. Dadurch wird die Montage aufwendig und kostspielig.

Ebenso nachteilig ist es, wenn - wie beispielsweise beim Gegenstand aus GB-A 1 336 726, s. dort insbesondere Figur 11 - die Befestigungsvorrichtung zwei Befestigungsbänder aufweist, wobei das eine Befestigungsband das Produktbehältnis und die Klemme umgreift und wobei das andere Befestigungsband die Klemme und die Rohrleitung umgreift. Schließlich ist aus US-A 3,434,682 eine Kabelschutzklemme bekannt, die auch dazu dient, das Kabel mit Hilfe eines Befestigungsbandes an einem Rohrkörper festzulegen. Jedoch auch hier umfängt das Befestigungsband die Klemme, das Kabel und das Rohr, verbunden mit den oben beschriebenen Nachteilen.

Aufgabe der Erfindung ist es daher, die Befestigungsvorrichtung der eingangs genannten Art derart weiter auszugestalten, dass Vorbereitung und Durchführung der Montage ohne Schwierigkeiten von nur einer Person bewerkstelligt werden können. In Weiterbildung des Erfindungsgedankens soll der Anwendungsbereich der Befestigungsvorrichtung erweitert werden.

Diese Aufgabe ist erfindungsgemäß durch die Merkmale von Anspruch 1 gelöst. Diese erfindungsgemäße Maßnahme führt dazu, dass sich die Rohrleitungen mit den aufgerasteten Klemmen und den an letzteren unverlierbar angebrachten Befestigungsbändern von einer Person vormontieren lassen, so dass dann die so gebildete Einheit anschließend von derselben Person durch Anlegen der Befestigungsbänder am Produktbehältnis angebracht werden kann, ohne dass es dazu der Hilfestellung durch eine weitere Person bedarf.

In diesem Rahmen kann erfindungsgemäß vorgesehen sein, dass die Ausnehmung eine Bohrung zum Durchtritt des Befestigungsbandes ist, wobei die Bohrung zweckmäßig einen einem rechteckigen Querschnitt des Befestigungsbandes angepassten Querschnitt aufweist. So ausgebildete Klemmen lassen sich in einfacher Weise auf das zugeordnete Befestigungsband auffädeln. Die Richtung der Bohrung relativ zur Längserstreckung der Rohrleitung kann dabei bei der Produktion der Klemmen im Hinblick auf den vorgesehenen Anwendungsbereich bestimmt werden. Stellt man sich beispielsweise ein oder mehrere Rohrleitungen als Begleitheizung für eine zu diesen parallel verlaufende Produktleitung vor, welch letztere von den Befestigungsbändern zu umfangen wäre, so wären die Bohrungen der Klemmen senkrecht zur Richtung der Rohrleitungen anzuordnen.

In diesem Zusammenhang kann es aber auch zweckmäßig sein, dass der Querschnitt der Bohrung in zur Oberfläche des Produktbehältnisses im wesentlichen paralleler bzw. tangentialer Richtung einem Mehrfachen der zugeordneten Breite des Befestigungsbandes entspricht. Hier besteht dann die Möglichkeit, die Klemme gegenüber der Längserstreckung des Befestigungsbandes in weiten Bereichen zu verschwenken, so daß bezogen auf das vorstehend gegebene Beispiel auch eine schraubengangförmige Verlegung der Rohrleitungen um eine Produktleitung möglich wäre.

Vorteilhaft ist es bei Klemmen der vorgenannten Art, daß die Bohrung an ihren Endbereichen eine zur Umfangskontur des Produktbehältnisses im wesentlichen äquidistant verlaufende konische Erweiterung aufweist, die damit auf der dem Behältnis zugewandten Seite der Bohrung läge und ein allzu starkes Abknicken des Befestigungsbandes beim Austritt aus der Bohrung verhindert.

Um die vorerwähnte Schwenkbarkeit der Klemmen bezüglich Richtung der Bohrung einerseits und durch das Maul bestimmter Richtung der Rohrleitung andererseits zu ermöglichen und auch gegenüber dem vorgenannten Beispiel noch beliebig zu vergrößern, kann es in Weiterbildung des Erfindungsgedankens besonders vorteilhaft sein, daß der Sockel zwischen Bohrung und Fuß der Schenkel im wesentlichen parallel zur Oberfläche des Produktbehältnisses in einer Ebene geteilt ist, und daß die beiden Teile gegenseitig unverlierbar um eine zur Oberfläche des Produktbehältnisses im wesentlichen senkrechten Achse drehbar miteinander verbunden sind. Eine solche Drehverbindung kann zweckmäßig in an sich bekannter Weise durch einen endständig eine radial federnde Erweiterung aufweisenden Zapfen des einen Teiles und eine zu Beginn eine Querschnittsverjüngung aufweisende Bohrung des anderen Teiles zur unverlierbaren Aufnahme des Zapfens gebildet sein, so daß also die beiden Teile durch rastendes Einstecken des Zapfens in seine Aufnahmebohrung unverlierbar, jedoch frei gegeneinander drehbar verbunden werden können.

Eine wiederum andere Gestaltung nach der Erfindung kann dadurch ausgezeichnet sein, daß der Grund des durch die Schenkel gebildeten Maules die Ausnehmung zur unverlierbaren Aufnahme des Befestigungsbandes aufweist. Auch hiermit ergibt sich eine besonders einfache Bauform für den Anwendungsfall, bei dem die Längsrichtung des Befestigungsbandes mit der Richtung der Längserstreckung der Rohrleitung übereinstimmt. Vorteilhaft geschieht hier die weitere Ausgestaltung dadurch, daß die Ausnehmung nutförmig mit einem sich zum Grund hin konisch erweiternden Querschnitt ausgebildet ist, und daß der Abstand der zum Befestigungsband parallelen Ränder der Nut geringer ist als die Breite des Befestigungsbandes. Die Nut hat also beispielsweise einen schwalbenschwanzförimgen Querschnitt, in den sich das Befestigungsband einrasten läßt.

Insgesamt ergeben sich also mit dem grundlegenden Erfindungsgedanken einfache Bauformen für die Befestigungsvorrichtung, die alle die gesamte Montage durch nur eine einzige Person ermöglichen. Andererseits ermöglicht die Erfindung in einfacher Weise die Bereitstellung einer Befestigungsvorrichtung für unterschiedlichste Anwendungsfälle.

Für alle vorgenannten Bauformen ist es zweckmäßig, die rastende Aufnahme der Rohrleitung in dem durch die Schenkel gebildeten Maul dadurch zu verwirklichen, daß der gegenseitige Abstand der freien Ende der Schenkel kleiner ist als der Außendurchmesser der Rohrleitung. Auch kann jeweils vorgesehen sein, daß die am Behältnis anliegende Fläche des Sokkels der Oberflächenkontur des Behältnisses angepaßt ist; um hier einen festeren Sitz der jeweiligen Klemme am Behältnis zu gewährleisten. Zweckmäßig werden die Klemmen aus einem glasfaserverstärkten Polyamid hergestellt, so daß sie eine hohe Temperaturbeständigkeit aufweisen und für sie das kostengünstige Spritzgießverfahren angewendet werden kann.

Schließlich ist es für den Verschluß des Befestigungsbandes zweckmäßig, hier ein Schraubschloß einzusetzen, da es in bekannter Weise eine einfache Montage und auch spätere Nachspannung der Befestigung ermöglicht.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: eine Produktrohrleitung mit daran über verschiedene Befestigungsvorrichtungen angebrachter Rohrleitung einer Begleitheizung;
- Figuren 2 und 3: eine Klemme in Stirn- und Seitenansicht;
- Figur 4: eine perspektivische Ansicht der Klemme gemäß Figur 2 und 3; und
- Figur 5: die Stirnansicht eines Kessels mit über dessen Umfang verlegter Rohrleitung einer Begleitheizung.

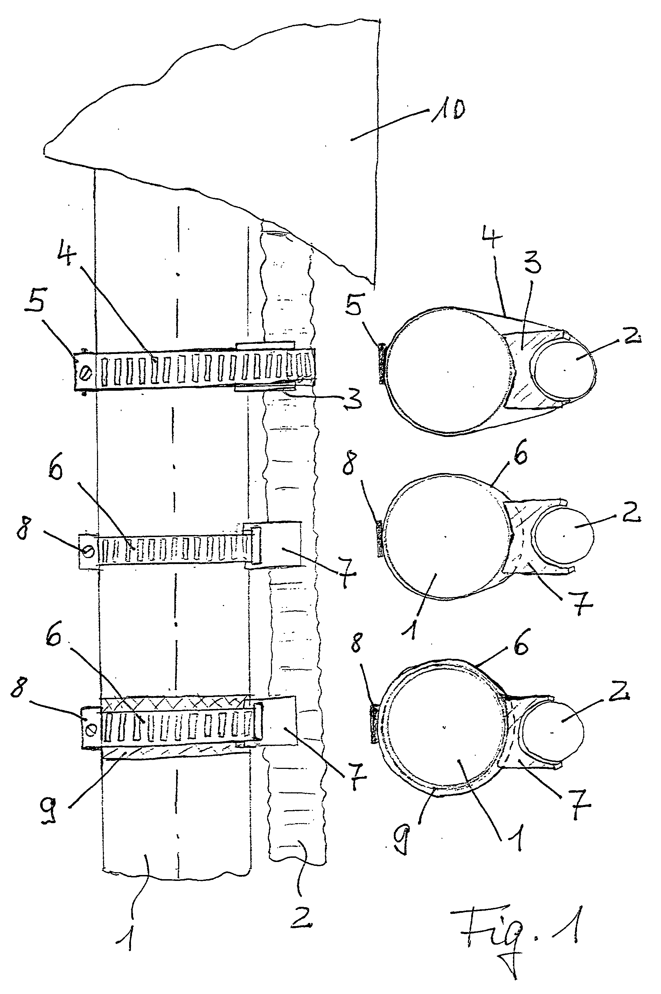

Figur 1 zeigt eine Produktrohrleitung 1 mit zu dieser parallel mit gegenseitigem Abstand verlegter Rohrleitung 2 einer Begleitheizung, wobei die Rohrleitung 2 in diesem Falle ein Ringwellschlauch aus Metall ist. Auch die Produktrohrleitung 1 ist üblicherweise ein Metallrohr.

Die Befestigung der Rohrleitung 2 an der Produktleitung 1 ist anhand dreier verschiedener Befestigungsvorrichtungen gezeigt, deren Einzelheiten jeweils rechts daneben in einem Radialschnitt durch die Rohrleitungen 1, 2 näher veranschaulicht sind.

Dabei zeigt die obere Befestigung den in der Einleitung geschilderten Stand der Technik, gemäß dem die von dem Maul einer Klemme 3 aufgenommene Rohrleitung 2 durch ein um die Leitung 1 geführtes Befestigungsband 4 befestigt ist, das seinerseits die Rohrleitung 2 auf deren der Leitung 1 abgewandten Seite umfängt und damit die aus Rohrleitung 2 und Klemme 3 gebildete Einheit gegen die Leitung 1 spannt. Die Montage einer solchen Befestigung ist nur mit Hilfe zweier Personen möglich, da eine Person die Rohrleitung 2 mit den darauf aufgesteckten Klemmen 3 halten muß, damit die andere die Befestigungsbänder 4 um das ganze herumlegen und mit Hilfe des Schlosses 5 anspannen kann.

Um dieses Erfordernis zweier Personen zur Montage zu beheben, ist bei der mittleren dargestellten Befestigungsvorrichtung die Anordnung so getroffen, daß das Befestigungsband 6 den Sockel der Klemme 7 über eine noch im einzelnen zu erläuternde Bohrung durchquert. Dies hat zur Folge, daß die Rohrleitung 2 mit aufgesteckten Klemmen 7 und in deren Bohrung eingefädelten Befestigungsbändern 6 von einer Person vormontiert werden kann, die dann anschließend auch ohne weitere Hilfestellung die so gebildete Baueinheit an die Produktleitung 1 anlegen und nacheinander die Bänder 6 mit Hilfe des Schlosses 8 anspannen kann.

Die in Figur 1 dargestellte untere Befestigungsvorrichtung unterscheidet sich von der mittleren nur dadurch, daß zwischen Befestigungsband 6 und Produktleitung 1 noch eine Bandage 9 aus isolierendem Material eingefügt ist, die vorher mit Hilfe eines Klebebandes oder sonstigen Klebemittels an der Produktleitung 1 angebracht worden sein kann und im übrigen dazu dient, bei unterschiedlichen Materialien von Produktleitung 1 einerseits und Rohrleitung 2 sowie insbesondere Befestigungsband 6 jegliche Kontaktkorrosion zu vermeiden.

Figur 1 zeigt schließlich noch ausschnittweise einen Isoliermantel 10 aus chloridfreier Dämmwolle gegebenenfalls mit einer Ummantelung aus Aluminium- oder Stahlblech, mit der die gesamte dargestellte Leitungseinheit zu Zwecken der Wärmeisolation umgeben ist. Nicht dargestellt ist, daß vielfach zwei oder mehrere Rohrleitungen 2 um die Produktleitung 1 verteilt in entsprechender Weise verlegt sind, die dann teilweise der Zufuhr und teilweise der Abfuhr des Heizmediums dienen.

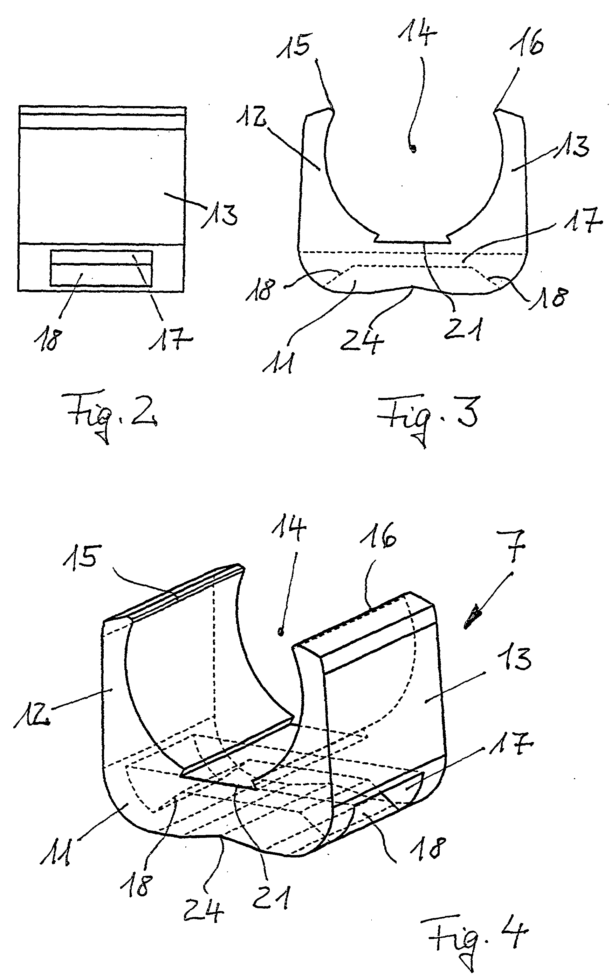

Die aus Figur 1 ersichtliche Klemme 7 ist in den Figuren 2 bis 4 mehr ins einzelne gehend dargestellt. Daraus ist ersichtlich, daß die Klemme vom Grundaufbau her aus einem Sockel 11 und zwei damit einstückig verbundenen Schenkeln 12, 13 besteht, die ein Maul 14 bilden zur Aufnahme der nicht mehr dargestellten Rohrleitung 2. Dabei ist der Abstand der freien Enden 15, 16 der Schenkel 12, 13 geringer als der dem Außendurchmesser der Rohrleitung 2 entsprechende Maximalquerschnitt des Maules 14, so daß sich die freien Ende 15, 16 rasten um die in das Maul 14 eingesetzte Rohrleitung 2 legen.

Bei der dargestellten Ausführungsform ist der Sockel 11 von einer rechtekkigen Bohrung 17 durchquert, deren Längserstreckung senkrecht zu der durch das Maul 14 bestimmten Längserstreckung der Rohrleitung 2 liegt. Diese Bohrung 17 wird von dem in Figur 1 gezeigten Befestigungsband 6 durchquert, so daß das Befestigungsband 6 die Klemme 7 über ihren Sokkel 11 an der Produktleitung 1 halten kann und damit über die Gestaltung des Maules 14 auch die Rohrleitung 2.

Die in Längsrichtung der Rohrleitung 2 gemessene Breite der Bohrung 17 kann der Breite des Befestigungsbandes 6 entsprechen, wenn, wie in Figur 1 gezeigt, die Rohrleitung 2 parallel zur Produktleitung 1 verlegt werden soll.

Die Breite der Bohrung 17 kann jedoch auch wesentlich größer als die des Befestigungsbandes 6 gewählt werden, woraus sich die Möglichkeit ergibt, die Klemme 7 um einen erheblichen Betrag gegenüber dem Befestigungsband 6 zu schwenken, wodurch die Möglichkeit eröffnet wird, die Rohrleitung 2 schraubengangförmig bzw. wendelförmig um die Produktleitung 1 verlaufend zu verlegen.

Wie die Figuren 2 bis 4 zeigen, hat die Bohrung 17 an ihren Enden auf der der Produktleitung 1 zugewandten Seite je eine konische Erweiterung 18, deren Zweck es ist, einen zu stark abgeknickten Auslauf des Befestigungsbandes 6 aus der Bohrung 17 zu verhindern.

Figur 5 zeigt einen anderen Anwendungsfall der Gestalt, daß eine Heizung so um einen zylindrischen Kessel 19 gelegt ist, daß die Rohrleitung 20 nicht parallel zur Kesselachse sondern im wesentlichen senkrecht dazu über den Umfang des Kessels 19 verläuft. Um auch diese Verlegeart mit Hilfe der anhand der Figuren 2 bis 4 im einzelnen erläuterten Klemmen 7 zu ermöglichen, sind diese zusätzlich am Grund des Maules 14 mit einer nutförmigen Ausnehmung 21 für ein Befestigungsband 22 versehen. Um auch hier eine unverlierbare Halterung zwischen Ausnehmung 21 und Befestigungsband 22 zu gewährleisten, ist die Ausnehmung 21 mit einem schwalbenschwanzförmigen Querschnitt ausgestattet, dessen Öffnungsweite geringer ist als die Breite des Befestigungsbandes 22, so daß letzeres unverlierbar in die Ausnehmung 21 eingerastet werden kann. Somit ist auch hier die Montage in der bereits anhand der Figur 1 geschilderten Weise durch nur eine Person möglich, die nach Anlegen des aus Rohrleitung 20, Klemmen 7 und Befestigungsband 22 gebildeten Bausatzes an die Wand des Kessels 19 für das Spannen des Befestigungsbandes 22 mit Hilfe seines Schlosses 23 frei ist.

Wie bereits in der Beschreibungseinleitung ausgeführt, kann für den bloßen Anwendungsfall gemäß Figur 5 natürlich die Klemme 7 auch so gestaltet sein, daß anstelle der Ausnehmung 21 die Bohrung 17 um 90° geschwenkt im Sockel 11 angebracht wird.

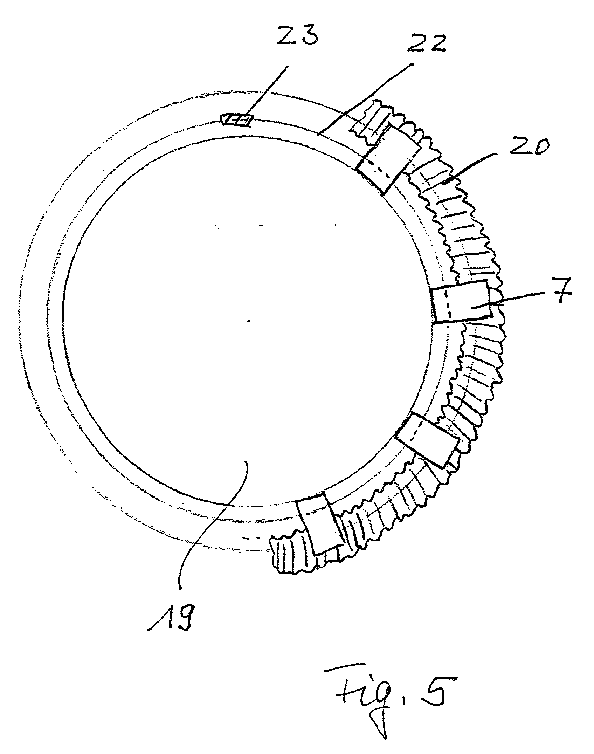

Schließlich sei noch darauf hingewiesen, daß die an der Produktleitung 1 bzw. an der Wand des Kessels 19 anliegende Fläche des Sockels 11 an die Oberflächenkontur der Produktleitung 1 bzw. des Kessels 19 angepaßt sein kann, wie dies insbesondere aus den Figuren 3 und 4 mit der Querschnittsverjüngung 24 veranschaulicht ist.

## Patentansprüche

1. Befestigungsvorrichtung für Heizmittel führende starre oder flexible Rohrleitungen als Begleitheizung eines Produktbehältnisses in Form einer Produktleitung, eines Kessels oder dergleichen enthaltend eine Klemme (7) mit einem am Produktbehältnis wenigstens mittelbar anliegenden Sockel und zwei von diesem ausgehende, ein Maul zur Aufnahme der Rohrleitung bildende Schenkel (12, 13) sowie eine Rohrleitung und Klemme mit dem Produktbehältnis verbindendes, letzteres umfangendes Befestigungsband mit Verschluss, wobei der Sockel (11) der Klemme (7) eine Ausnehmung (17, 21) zur unverlierbaren Aufnahme des Befestigungsbandes (6, 22) aufweist,
**dadurch gekennzeichnet,**
**dass** die Aufnahme der Rohrleitung durch die beiden Schenkel der Klemme in Form einer Rastverbindung erfolgt und hierbei der gegenseitige Abstand der freien Enden (15, 16) der Schenkel (12, 13) kleiner ist als der Außendurchmesser der Rohrleitung (2), so dass sich die freien Enden rastend um die in das Maul eingesetzte Rohrleitung legen.

2. Befestigungsvorrichtung nach Anspruch 1,
**dadurch gekennzeichnet,**
**dass** die Ausnehmung eine Bohrung (17) zum Durchtritt des Befestigungsbandes (6, 22) ist.

3. Befestigungsvorrichtung nach Anspruch 2,
**dadurch gekennzeichnet,**
**dass** die Bohrung (17) einen einem rechteckigen Querschnitt des Befestigungsbandes (6) angepassten Querschnitt aufweist.

4. Befestigungsvorrichtung nach einem der Ansprüche 2 oder 3,
**dadurch gekennzeichnet,**
**dass** der Querschnitt der Bohrung (17) in zur Oberfläche des Produktbehältnisses (1, 19) im wesentlichen paralleler Richtung einem mehrfachen der zugeordneten Breite des Befestigungsbandes (6, 22) entspricht.

5. Befestigungsvorrichtung nach einem oder mehreren der Ansprüche 2 bis 4,
**dadurch gekennzeichnet,**
**dass** die Bohrung (17) an ihren Endbereichen eine zur Umfangskontur des Produktbehältnisses (1, 19) im wesentlichen äquidistant verlaufende konische Erweiterung (18) aufweist.

6. Befestigungsvorrichtung nach einem oder mehreren der Ansprüche 2 bis 5,
**dadurch gekennzeichnet,**
**dass** der Sockel (11) zwischen Bohrung (17) und Fuß der Schenkel (12, 13) im wesentlichen parallel zur Oberfläche des Produktbehältnisses (1, 19) in einer Ebene geteilt ist, und dass die beiden Teile gegenseitig um eine zur Oberfläche des Produktbehältnisses (1, 19) im wesentlichen senkrechte Achse drehbar miteinander verbunden sind.

7. Befestigungsvorrichtung nach Anspruch 6,
**dadurch gekennzeichnet,**
**dass** die Drehverbindung durch einen endständig eine radial federnde Erweiterung aufweisenden Zapfen des einen Teiles und eine zu Beginn eine Querschnittsverjüngung aufweisende Bohrung des anderen Teiles zur Aufnahme des Zapfen gebildet ist.

8. Befestigungsvorrichtung nach einem oder mehreren der Ansprüche 1 bis 7,
**dadurch gekennzeichnet,**
**dass** der Grund des durch die Schenkel (12, 13) gebildeten Maules (14) die Ausnehmung (21) zur Aufnahme des Befestigungsbandes (22) aufweist.

9. Befestigungsvorrichtung nach Anspruch 8,
**dadurch gekennzeichnet,**
**dass** die Ausnehmungen (21) nutförmig mit einem sich zum Grund hin konisch erweiternden Querschnitt ausgebildet ist, und dass der Abstand der zum Befestigungsband (22) parallelen Ränder der Nut geringer ist als die Breite des Befestigungsbandes (22).

10. Befestigungsvorrichtung nach einem oder mehreren der Ansprüche 1 bis 9,
**dadurch gekennzeichnet,**
**dass** die Klemme (7) aus einem glasfaserverstärkten Polyamid besteht.

11. Befestigungsvorrichtung nach einem oder mehreren der Ansprüche 1 bis 10,
**dadurch gekennzeichnet,**
**dass** der Verschluss (8, 23) des Befestigungsbandes (6, 22) ein Schraubschloss ist.

## Claims

1. Fastening device for rigid or flexible pipes conveying heating medium as secondary heating means for a product container in the form of a product pipe, a tank or the like, comprising a clip (7) with a base which rests at least indirectly on a product container and two jaws (12, 13) which extend from the base and form an opening to receive the pipe, as well as a fastening strap which connects the pipe and the clip to the product container and surrounds the latter and has a closure means, the base (11) of the clip (7) having a cut-out (17, 21) to receive the fastening strap (6, 22) undetachably, **characterised in that** the pipe is received by the two jaws of the clip by an engaging connection and in this case the reciprocal spacing of the free ends (15, 16) of the jaws (12, 13) is smaller than the external diameter of the pipe (2), so that the free ends engage around the pipe inserted into the opening.

2. Fastening device as claimed in Claim 1, **characterised in that** the cut-out is a bore (17) for the fastening strap (6, 22) to pass through.

3. Fastening device as claimed in Claim 2, **characterised in that** the bore (17) has a cross-section adapted to a rectangular cross-section of the fastening strap (6).

4. Fastening device as claimed in one of Claims 2 or 3, **characterised in that** the cross-section of the bore (17) in the direction substantially parallel to the surface of the product container (1, 19) corresponds to a multiple of the associated width of the fastening strap (6, 22).

5. Fastening device as claimed in one or more of Claims 2 to 4, **characterised in that** the bore (17) has at its end regions a conical widening (18) which extends so as to be substantially equidistant from the circumferential contour of the product container (1, 19).

6. Fastening device as claimed in one or more of Claims 2 to 5, **characterised in that** the base (11) is divided in a plane between the bore (17) and the root of the jaws (12, 13) substantially parallel to the surface of the product container (1, 19) and that the two parts are connected to one another so as to be mutually rotatable about an axis substantially perpendicular to the surface of the product container (1, 19).

7. Fastening device as claimed in Claim 6, **characterised in that** the rotary connection is formed by a lug having a radially resilient widening at the end on one part and bore having a tapering of the cross-section at the beginning on the other part to receive the lug.

8. Fastening device as claimed in one or more of Claims 1 to 7, **characterised in that** the bottom of the opening (14) formed by the jaws (12, 13) has the cut-out (21) to receive the fastening strap (22).

9. Fastening device as claimed in Claim 8, **characterised in that** the cut-out (21) is constructed with a cross-section widening conically towards the bottom, and that the distance between the edges of the groove parallel to the fastening strap (22) is smaller than the width of the fastening strap (22).

10. Fastening device as claimed in one or more of Claims 1 to 9, **characterised in that** the clip (7) is made from a glass fibre-reinforced polyamide.

11. Fastening device as claimed in one or more of Claims 1 to 10, **characterised in that** the closure means (8, 23) of the fastening strap (6, 22) is a screw lock.

## Revendications

1. Dispositif de fixation pour tuyaux souples ou rigides conduisant des moyens de chauffage en tant que chauffage d'accompagnement d'un récipient de produit sous forme d'un tuyau de produit, d'une chaudière ou d'éléments semblables contenant une pince (7) avec un socle attenant au moins indirectement au récipient de produit et deux montants (12, 13) partant dudit socle et formant une gueule destinée à recevoir le tuyau, ainsi qu'une bande de fixation avec fermeture reliant tuyau et pince au récipient de produit et entourant ledit récipient de produit, le socle (11) de la pince (7) présentant un creux (17, 21) destiné à recevoir de manière imperdable la bande de fixation (6, 22),
**caractérisé en ce que**
la réception du tuyau se fait grâce aux deux montants de la pince sous la forme d'un raccord encliquetable et pour ce faire, la distance réciproque des extrémités libres (15, 16) des montants (12, 13) est inférieure au diamètre extérieur du tuyau (2), de manière à ce que les extrémités libres se positionnent avec enclenchement ou encliquetage autour du tuyau inséré dans la gueule.

2. Dispositif de fixation selon la revendication 1,
**caractérisé en ce que**
le creux est un alésage (17) destiné au passage de la bande de fixation (6, 22).

3. Dispositif de fixation selon la revendication 2,
**caractérisé en ce que**
l'alésage (17) présente une section transversale adaptée à une section transversale rectangulaire de la bande de fixation (6).

4. Dispositif de fixation selon l'une quelconque des revendications 2 ou 3,
**caractérisé en ce que**
la section transversale de l'alésage (17) correspond dans une direction parallèle pour l'essentiel à la surface du récipient de produit (1, 19) à un multiple de la largeur associée de la bandé de fixation (6, 22).

5. Dispositif de fixation selon l'une ou plusieurs des revendications 2 à 4,
**caractérisé en ce que**
l'alésage (17) présente à ses zones d'extrémité un élargissement conique (18) s'étendant de manière équidistante pour l'essentiel par rapport au contour périphérique du récipient de produit (1, 19).

6. Dispositif de fixation selon l'une ou plusieurs des revendications 2 à 5,
**caractérisé en ce que**
le socle (11) est divisé en un plan entre l'alésage (17) et le pied des montants (12, 13) pour l'essentiel parallèlement à la surface du récipient de produit (1, 19), et **en ce que** les deux parties sont reliées réciproquement l'une à l'autre de manière pivotante autour d'un axe perpendiculaire pour l'essentiel à la surface du récipient de produit (1, 19).

7. Dispositif de fixation selon la revendication 6,
**caractérisé en ce que**
le raccord pivotant est formé par un pivot présentant à son extrémité un élargissement élastique de manière radiale d'une des parties et un alésage de l'autre partie présentant au début un rétrécissement de section transversale destiné à recevoir le pivot.

8. Dispositif de fixation selon l'une ou plusieurs des revendications 1 à 7,
**caractérisé en ce que**
la base de la gueule (14) formée par les montants (12, 13) présente le creux (21) destiné à recevoir la bande de fixation (22).

9. Dispositif de fixation selon la revendication 8,
**caractérisé en ce que**
le creux (21) est formé en forme de gorge avec une section transversale s'élargissant en cône en allant vers la base, et **en ce que** la distance entre les bords de la gorge parallèles à la bande de fixation (22) est inférieure à la largeur de la bande de fixation (22).

10. Dispositif de fixation selon l'une ou plusieurs des revendications 1 à 9,
**caractérisé en ce que**
la pince (7) est en polyamide renforcé par des fibres de verre.

11. Dispositif de fixation selon l'une ou plusieurs des revendications 1 à 10,
**caractérisé en ce que**
la fermeture (8, 23) de la bande de fixation (6, 22) est un verrou à vis.
